# EUROPEAN PATENT SPECIFICATION

(11) **EP 3 972 184 B1**
(45) Date of publication and mention of the grant of the patent: **26.04.2023**
(21) Application number: 21205034.8
(22) Date of filing: 16.12.2014
(51) Int. Cl.: H04L 5/00, H04L 5/14, H04W 74/08, H04L 27/26, H04W 84/12

(54) **SYSTEM AND METHOD FOR WLAN OFDMA DESIGN OF UPLINK TRANSMISSIONS**
SYSTEM UND VERFAHREN FÜR WLAN-OFDMA-ENTWURF FÜR UPLINK-ÜBERTRAGUNGEN
SYSTÈME ET PROCÉDÉ DE CONCEPTION OFDMA WLAN DE TRANSMISSIONS EN LIAISON MONTANTE

(30) Priority: 18.12.2013 US 201361917791 P; 24.07.2014 US 201414340058
(43) Date of publication of application: 23.03.2022
(62) Divisional of application: 14870891.0
(73) Proprietor: Huawei Technologies Co., Ltd., Shenzhen, Guangdong 518129 (CN)
(72) Inventor: ABOUL-MAGD, Osama, Shenzhen, 518129 (CN); AU, Kwok Shum, Shenzhen, 518129 (CN); SUH, Jung Hoon, Shenzhen, 518129 (CN)
(74) Representative: Epping - Hermann - Fischer

(56) References cited:
- US-A1- 2012 327 915
- JUNWOO JUNG ET AL: "Group Contention-Based OFDMA MAC Protocol for Multiple Access Interference-Free in WLAN Systems", IEEE TRANSACTIONS ON WIRELESS COMMUNICATIONS, IEEE SERVICE CENTER, PISCATAWAY, NJ, US, vol. 11, no. 2, 1 February 2012 (2012-02-01), pages 648-658, XP011414999, ISSN: 1536-1276, DOI: 10.1109/TWC.2011.122211.102316
- HASAN SHAHID FERDOUS ET AL: "Enhanced IEEE 802.11 by integrating multiuser dynamic OFDMA", WIRELESS TELECOMMUNICATIONS SYMPOSIUM (WTS), 2010, IEEE, PISCATAWAY, NJ, USA, 21 April 2010 (2010-04-21), pages 1-6, XP031686251, ISBN: 978-1-4244-6558-3
- GEBRESELASSIE HAILE ET AL: "C-OFDMA: Improved Throughput for Next Generation WLAN Systems Based on OFDMA and CSMA/CA", INTELLIGENT SYSTEMS MODELLING&SIMULATION (ISMS), 2013 4TH INTERNATIONAL CONFERENCE ON, IEEE, 29 January 2013 (2013-01-29), pages 497-502, XP032364326, DOI: 10.1109/ISMS.2013.121 ISBN: 978-1-4673-5653-4

## Description

### TECHNICAL FIELD

The present invention relates to network communications, and, in particular embodiments, to a system and method for WLAN OFDMA design of uplink and downlink transmissions.

### BACKGROUND

Wireless Local Area Networks (WLANs) commonly operate in unlicensed spectrum bands. Rules for operation in these bands force competing devices to share the available resources and defer their intended transmissions when the medium is sensed busy. The medium refers to the transmission channel or bandwidth shared by multiple components of the WLAN to transmit uplink and downlink signals. The bandwidth (or frequency range) is shared for uplink and downlink transmissions. Typically, a WLAN uses an Orthogonal Frequency-Division Multiplexing (OFDM) transmission format in which all transmission resources are assigned to a single device. Random assignment is commonly achieved using carrier sense multiple access with collision avoidance (CSMA/CA). With CSMA/CA a device wins access to the medium, transmits its data up to a pre-defined period of time, and then gives up the medium for other devices to compete for transmission. In contrast, Orthogonal Frequency Division Multiple Access (OFDMA) is a transmission and access mechanism that accommodates multiple-user transmissions simultaneously. OFDMA is commonly implemented in wireless infrastructures operating in the licensed bands in order to meet timing information in terms of frame structure and the scheduling of resources among a subset of users. There is a need for efficient schemes for implementing OFDMA in WLANs.

HASAN SHAHID FERDOUS ET AL: "Enhanced IEEE 802.11 by integrating multiuser dynamic OFDMA", WIRELESS TELECOMMUNICATIONS SYMPOSIUM (WTS), 2010, IEEE, PISCATAWAY, NJ, USA, ISBN: 978-1-4244-6558-3 discusses the problems associated with the present contention resolution mechanism of IEEE 802.11 DCF and presents a new approach to improve it. The proposed MAC, using OFDMA in the physical layer, can incorporate multiple concurrent transmissions or receptions in a dynamic manner and can adjust the collision probability based on the traffic load when nodes are endowed with a single half-duplex radio only. Simulation results show that the system improves throughput by up to 40 percent, reduces collision in control messages by up to 80 percent and reduces the average delay for data transmission by up to 20 percent.

JUNWOO JUNG ET AL: "Group Contention-Based OFDMA MAC Protocol for Multiple Access Interference-Free in WLAN Systems, IEEE TRANSACTIONS ON WIRELESS COMMUNICATIONS, vol. 11, no. 2 (2012-02-01), pages 648-658" briefly discussed multiple access interference (MAI) in WLAN systems. To solve this MAI problem, this paper proposed a group contention-based OFDMA to solve the MAI problem with an adequate cyclic prefix length and support a larger number of STAs. The STAs within the cyclic prefix duration that are synchronized to an access point (AP), are included in the same contending group and compete with other STAs of the group in transmitting packets. The proposed scheme achieves higher throughput than 802.11 protocols and a conventional CSMA combined with OFDMA.

### SUMMARY OF THE INVENTION

The invention is defined in the claims. In the following, parts of the description and drawings referring to embodiments which are not covered by the claims are not presented as embodiments of the invention, but as examples useful for understanding the invention.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates a WLAN basic service set (BSS);
Figure 2 illustrates embodiment of events during a downlink (DL) OFDMA TXOP;
Figure 3 illustrates a Block Acknowledgement Request (BAR) frame format;
Figure 4 illustrates a BAR control field format;
Figure 5 illustrates embodiment of events during an uplink (UL) OFDMA TXOP;
Figure 6 illustrates an embodiment of UL OFDMA transmissions;
Figure 7 illustrates an embodiment method of AP and STAs operations during the DL OFDMA TXOP;
Figure 8 illustrates an embodiment method of AP and STAs operations during the UL OFDMA TXOP; and
Figure 9 is a diagram of a processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present can be embodied in a wide variety of specific contexts. The specific embodiments discussed are merely illustrative of specific ways to make and use the invention, and do not limit the scope of the invention.

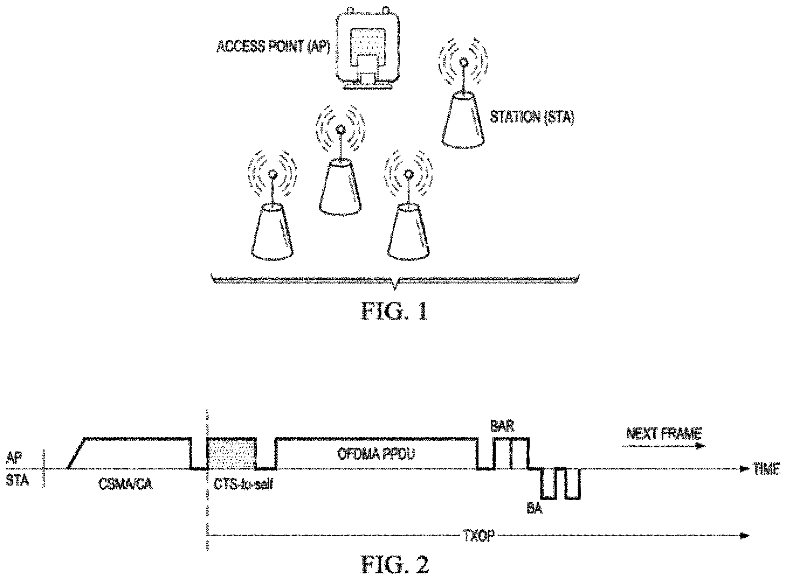

Disclosed herein are system and method embodiments for WLAN OFDMA operations in uplink and downlink transmissions. Figure 1 shows an example of a WLAN basic service set (BSS) including an access point (AP) and one or more stations (STAs). The AP is a communication device that allows the STAs to access and communicate with the WLAN. The STAs are any user communication devices allowing users or subscribers to communicate with the AP and hence the WLAN. Examples of STAs include smartphones, tablet computers, laptop computers, desktop computers, sensor devices (e.g., smartwatch), and other mobile or communication devices with WLAN (e.g., WiFi) capability.

The STAs and the AP compete for access to a shared medium, e.g., shared wireless channel bandwidth, symbols, or subcarriers. Access to the medium may be based on random access mechanisms such as carrier sense multiple access with collision avoidance (CSMA/CA) or using a scheduling mechanism that allows the STAs and AP access to the medium at specified or predetermined times. Irrespective of how access to the medium is obtained, a downlink (DL) OFDMA transmission opportunity (TXOP) is obtained when the AP has the right to access the medium and communicates with multiple STAs in a single OFDMA transmission. An uplink (UL) OFDMA TXOP is obtained when a STA gains access to the medium and is ready to start an UL OFDMA TXOP by inviting other STAs to share the available transmission resources, e.g. the subcarriers.

In general, an OFDMA system consists of an integer N_{sc} of subcarriers defined in a channel of certain bandwidth, W Megahertz (MHz). For example in WLAN, the bandwidth W is usually set to 20 MHz. The subcarrier separation Δf is given by Δf = W/N_{sc}. The OFDMA symbol duration Tₛ is given by 1/Δf. The quantity N_{sc} is set at 64 in WLAN OFDM implementation. With the introduction of OFDMA to WLAN, N_{sc} may be set to a higher value, such as 256 or 512 to achieve finer granularity. During each OFDMA transmission (uplink or downlink), a number of subcarriers are allocated to each of the users participating in the transmission.

Figure 2 shows a sequence of events during a DL OFDMA TXOP according to an embodiment of the disclosure. Using CSMA/CA, a DL OFDMA TXOP starts when the AP gains access to the medium. The first action that the AP performs is to protect the medium. The protection of the medium can be performed by a signaling mechanism to request protection of the medium form access bother entities. In an embodiment, the signaling mechanism is sending a clear-to-send (CTS). As such, a CTS frame is sent by the AP using a non-High Throughput (non-HT) format and comprises a time value in a Legacy Signal Field (L-SIG) in the CTS frame for the legacy STAs, or in a Duration/ID field of the CTS frame for non-OFDMA STAs (e.g., high throughput (HT) and very high throughput (VHT) STAs). The time value allows all STAs to defer their transmissions by an amount of time. In various embodiments, the CTS sent by the AP does not require a reply back to the AP from other entities (STAs) receiving this CTS.

Alternatively, the AP can protect the medium by sending a request-to-send (RTS) message to one of its associated STAs. The STA then responds with a CTS message back to the AP. The RTS and CTS messages are sent using non-HT format. The AP then generates an OFDMA physical layer (PHY) Protocol Data Unit (PPDU) that includes frames destined to a number of STAs. For instance, the recipient STAs can be identified by a group ID (GrpID) in the OFDMA SIG field. The OFDMA resource allocation portion in the SIG field may be determined by any previous suitable packet transmission from the AP to the STAs, instead of using any separate channel sounding for the channel response information per each STA. For example, packets that were used for the contention to access the medium by each STA can also be used to get the channel response of each STA and to determine OFDMA resource allocation portion in the SIG field.

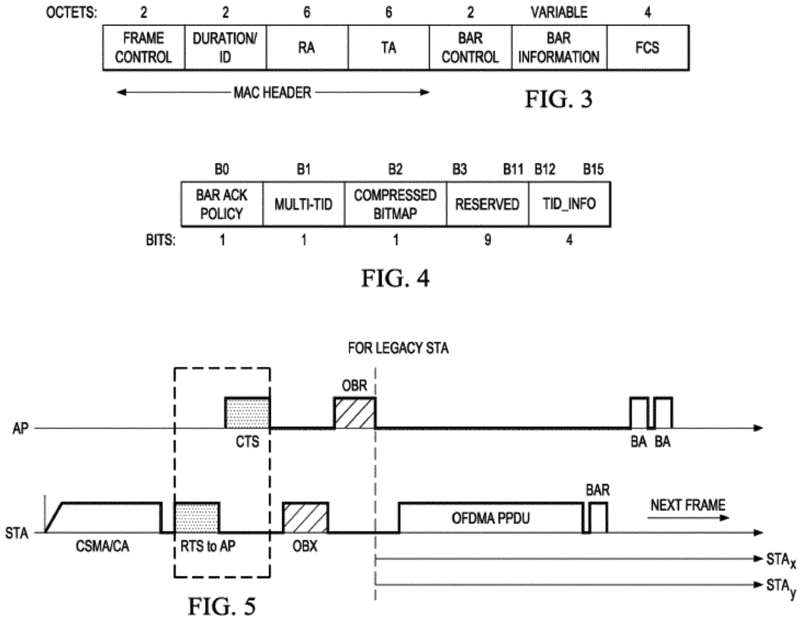

When the transmission of the OFDMA PPDU is finished, the AP requests acknowledgements from those STAs participating in the OFDMA transmission. Specifically, the AP sends Block Acknowledgement Request (BAR) frames using OFDMA, one frame for each of the participating STAs. Each STA responds with a Block ACK (BA) frame according to one of the following scenarios. If UL OFDMA is supported, then the participating STAs use OFDMA to send their BAs in the uplink direction. In this case, timing information for synchronizing the uplink transmissions needs to be propagated from the AP to the STAs. The timing information may be included in the BAR frame by extending the BAR information field. Figure 3 shows a BAR frame format. The BAR information field in the frame is of variable length and suitable for adding timing information at the start or at the end of the field.

Alternatively, if UL OFDMA is not supported, then the participating STAs need to send their BA frames in sequence. One way to determine the sequence for sending the BA frames is for the AP to transmit the BAR frames one after the other using non-HT format (e.g., without using OFDMA format). However, this approach produces some overhead. Instead, the AP can send an explicit sequence using some of the reserved bits in the BAR control field in the BAR frame. Figure 4 shows a BAR control field format. The number of bits needed to indicate the sequence depends on the maximum number of STAs that are allowed to participate in the OFDMA transmission. For example, in the case of 4 STAs, 2 bits are needed for the AP to communicate to the STAs the expected sequence of BA frames.

Figure 5 shows a sequence of events during an UL OFDMA TXOP according to an embodiment of the disclosure. The UL OFDMA TXOP starts when an OFDMA-capable STA (non-AP STA) acquires the medium. Similar to the DL OFDMA TXOP, the first action of the STA is to protect the medium by a signaling mechanism. The signaling mechanism requests protection of the medium from access by the AP. The signaling comprises sending an RTS frame to the AP and wait for the CTS response. The STAs defer their transmissions based on information included in the RTS/CTS frames.

The STA then sends an OFDMA Begin Transmission (OBX) frame to the AP. The reception of the OBX frame by the AP is an indication that the STA wishes to start an UL OFDMA TXOP by sharing the medium with other STAs. The AP selects other STAs to participate in the UL OFDMA, e.g., STAx and STAy in Figure 5, based on knowledge available at the AP on traffic requirements and frame availability. The AP then responds with an OFDMA Begin Receive (OBR) frame to participating STAs. According to the invention, in addition to the identities of stations participating in the UL TXOP, the OBR frame includes the allocation of subcarriers to STAs using, for example, GrpID and subcarrier group index, and the maximum PPDU length that STAs must adhere to. The OBR frame acts as a trigger to start the UL transmissions by participating stations. Each STA may compensate the timing offset and carrier frequency offset using Legacy STFs and LTFs appended in the OBR frame. Before the participating STAs, e.g., STAx and STAy in Figure 5, transmit the UL frame, OFDMA PPDU, a time delay is needed after the OBR reception to allow enough processing time for each participating STA to switch from receiving mode to transmitting mode. For instance, each STA waits at least 30 microseconds to establish an Inter Frame Spacing between the OBR reception and the OFDMA PPDU transmission. The Inter Frame Spacing avoids transient frequency agitation which can occur during the STA switching from the receiving mode to transmitting mode.

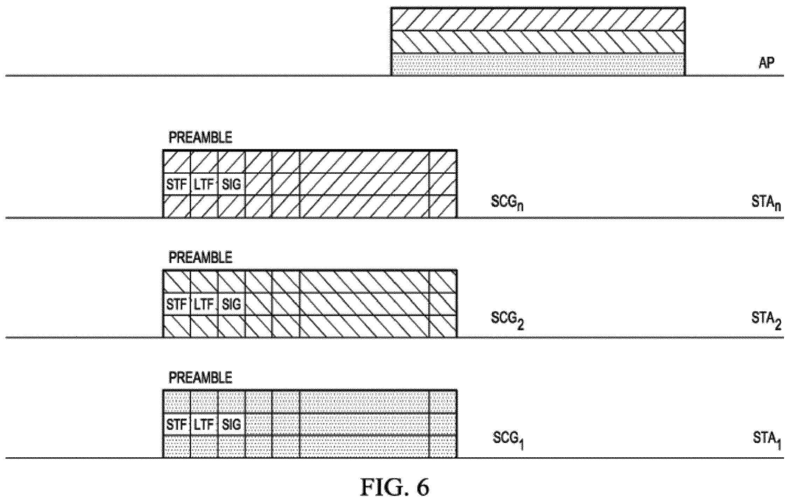

Figure 6 shows UL OFDMA transmissions according to an embodiment of the disclosure. After performing the synchronization during the OBX/OBR exchange of the UL OFDMA TXOP, the STAs start their OFDMA transmissions of PPDUs, as described above. The participating STAs transmit their corresponding PPDUs simultaneously on the uplink to the AP using their allocated subcarriers. After the successful transmission of the PPDUs by participating STAs, the AP can send BA frames after receiving BAR frames transmitted by the participating STAs using OFDMA format. The BA frames may be sent by the AP using the OFDMA format or can be sent sequentially as shown in Figure 5.

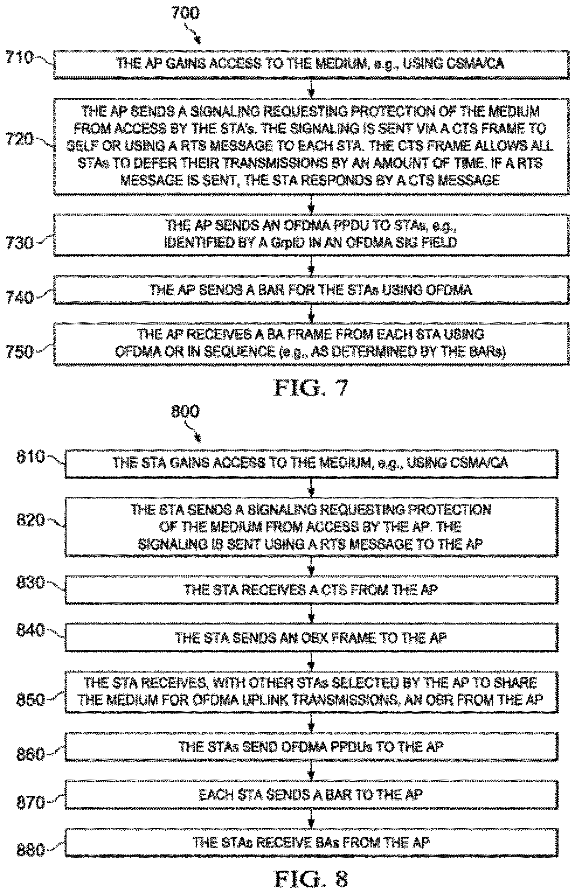

Figure 7 shows an embodiment method 700 of AP operations during a DL OFDMA TXOP. At step 710, the AP gains access to the medium, e.g., using CSMA/CA. At step 720, the AP sends a signaling requesting protection of the medium from access by the STAs. The signaling is sent using a CTS frame or using a RTS message to each STA. The CTS frame allows all STAs to defer their transmissions by an amount of time. In various embodiments, the CTS sent by the AP does not require a reply back to the AP from other entities (STAs) receiving this CTS. If a RTS message is sent, the STA responds by a CTS message back to the AP. At step 730, the AP sends an OFDMA PPDU to STAs, e.g., identified by a GrpID in an OFDMA SIG field. At step 740, the AP sends a BAR for the STAs using OFDMA. At step 750, the AP receives a BA frame from each STA using OFDMA or in sequence (e.g., as determined by the BARs).

Figure 8 shows an embodiment method of STAs operations during an UL OFDMA TXOP. At step 810, the STA gains access to the medium, e.g., using CSMA/CA. At step 820, the STA sends a signaling requesting protection of the medium from access by the AP. The signaling is sent using a RTS message to the AP. At step 830, the STA receives a CTS from the AP. At step 840, the STA sends an OBX frame to the AP. At step 850, the STA receives, with other STAs selected by the AP to share the medium for OFDMA uplink transmissions, an OBR from the AP. At step 860, the STAs send OFDMA PPDUs to the AP. At step 870, each STA sends a BAR to the AP. At step 880, the STAs receive BAs from the AP.

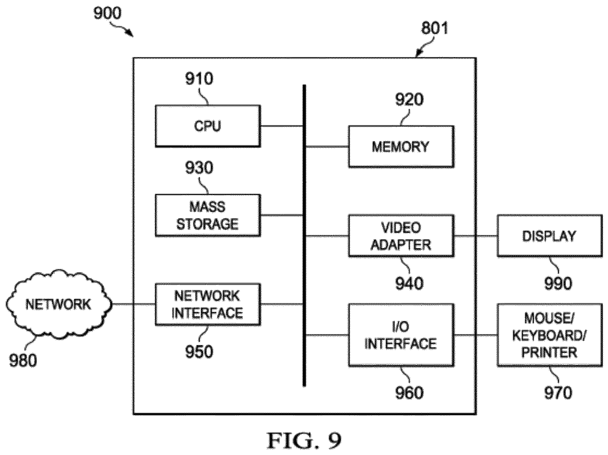

Figure 9 is a block diagram of a processing system 900 that can be used to implement various embodiments. For instance the processing system 900 can be part of a AP, a STA, or a controller in a WLAN. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 900 may comprise a processing unit 901 equipped with one or more input/output devices, such as a speaker, microphone, mouse, touchscreen, keypad, keyboard, printer, display, and the like. The processing unit 901 may include a central processing unit (CPU) 910, a memory 920, a mass storage device 930, a video adapter 940, and an I/O interface 960 connected to a bus. The bus may be one or more of any type of several bus architectures including a memory bus or memory controller, a peripheral bus, a video bus, or the like.

The CPU 910 may comprise any type of electronic data processor. The memory 920 may comprise any type of system memory such as static random access memory (SRAM), dynamic random access memory (DRAM), synchronous DRAM (SDRAM), read-only memory (ROM), a combination thereof, or the like. In an embodiment, the memory 920 may include ROM for use at boot-up, and DRAM for program and data storage for use while executing programs. In embodiments, the memory 920 is non-transitory. The mass storage device 930 may comprise any type of storage device configured to store data, programs, and other information and to make the data, programs, and other information accessible via the bus. The mass storage device 930 may comprise, for example, one or more of a solid state drive, hard disk drive, a magnetic disk drive, an optical disk drive, or the like.

The video adapter 940 and the I/O interface 960 provide interfaces to couple external input and output devices to the processing unit. As illustrated, examples of input and output devices include a display 990 coupled to the video adapter 940 and any combination of mouse/keyboard/printer 970 coupled to the I/O interface 960. Other devices may be coupled to the processing unit 901, and additional or fewer interface cards may be utilized. For example, a serial interface card (not shown) may be used to provide a serial interface for a printer.

The processing unit 901 also includes one or more network interfaces 950, which may comprise wired links, such as an Ethernet cable or the like, or wireless links to access nodes or one or more networks 980. The network interface 950 allows the processing unit 901 to communicate with remote units via the networks 980. For example, the network interface 950 may provide wireless communication via one or more transmitters/transmit antennas and one or more receivers/receive antennas. In an embodiment, the processing unit 901 is coupled to a local-area network or a wide-area network for data processing and communications with remote devices, such as other processing units, the Internet, remote storage facilities, or the like.

## Claims

1. A method performed by a station, STA, applied to orthogonal frequency division multiple access, OFDMA, uplink transmission in a wireless local area network, WLAN, the method comprising:
sending (820), to an access point, AP, a request-to-send, RTS, frame requesting protection of a transmission channel for uplink transmissions from access by the AP; and
receiving (830), from the AP, a clear-to-send, CTS, message;
sending (840), to the AP, a frame indicating that the STA wishes to start an OFDMA uplink transmission; receiving (850), by the STA, an OFDMA Begin Receive, OBR, frame from the AP, wherein the OBR frame is used to trigger multiple STAs associated with the AP to perform the OFDMA uplink transmission;
wherein the OBR frame comprises:
identifiers of the multiple STAs triggered to perform the OFDMA uplink transmission,
information about multiple subcarrier groups allocated to the multiple STAs for the OFDMA uplink transmission, and an indicator of a maximum length of a physical layer protocol data unit, PPDU that the multiple STAs must adhere to; and
where the STA determines that it is triggered to perform the OFDMA uplink transmission based on the identifiers of the multiple STAs, sending an OFDMA PPDU to the AP in response to the OBR frame by using multiple subcarriers in a subcarrier group allocated to the STA.

2. The method according to claim 1, wherein the information about the multiple subcarrier groups comprises a plurality of subcarrier group indices indicating the subcarrier groups.

3. The method according to any one of claims 1 or 2, wherein the sending the OFDMA PPDU comprises:
sending the OFDMA PPDU an inter-frame spacing after receiving the OBR frame, wherein the inter-frame spacing allows the STA to switch from a receive mode to a transmit mode.

4. A method performed by an access point, AP, for orthogonal frequency division multiple access, OFDMA, uplink transmission in a wireless local area network, WLAN, the method comprising:
receiving (820), from a station, STA, a request-to-send, RTS, frame requesting protection of a transmission channel for uplink transmissions from access by the AP; and
sending (830), a clear-to-send, CTS, message;
receiving (840), from the STA, a frame indicating that the STA wishes to start an OFDMA uplink transmission;
sending (850), by the AP, an OFDMA Begin Receive, OBR, frame to multiple stations, STAs, associated with the AP, the OBR frame being used to trigger the multiple STAs associated with the AP to perform the OFDMA uplink transmission, the OBR frame comprising:
identifiers of the multiple STAs triggered to perform the OFDMA uplink transmission,
information about multiple subcarrier groups allocated to the multiple STAs for the OFDMA uplink transmission, and an indicator of a maximum length of a physical layer protocol data unit, PPDU, that the multiple STAs must adhere to; and
receiving, by the AP, according to the multiple subcarrier groups, each OFDMA PPDU that is simultaneously sent by the multiple triggered STAs in response to the OBR frame.

5. The method according to claim 4, wherein the information about the multiple subcarrier groups comprises a plurality of subcarrier group indices indicating the subcarrier groups..

6. An access point, AP, supporting orthogonal frequency division multiple access, OFDMA, transmission in a wireless local area network, WLAN, wherein the AP comprises:
a processor;
a computer readable storage medium, configured to store a program executed by the processor, wherein when the program is run by the processor, the access point performs the method according to any one of claims 4 or 5.

7. A user station, STA, supporting orthogonal frequency division multiple access, OFDMA, transmission in a wireless local area network, WLAN, wherein the user station comprises:
a processor;
a computer readable storage medium, configured to store a program executed by the processor, wherein when the program is run by the processor, the user station performs the method according to any one of claims 1 to 3.

## Patentansprüche

1. Verfahren, durchgeführt durch eine Station (STA), angewendet auf eine Uplink-Übertragung über orthogonalen Frequenzmultiplex-Vielfachzugriff (orthogonal frequency division multiple access - OFDMA) in einem drahtlosen lokalen Netzwerk (wireless local area network - WLAN), das Verfahren umfassend:
Senden (820), an einen Zugriffspunkt (access point - AP), eines Sendeaufforderungs(request-to-send - RTS)-Rahmens, der Schutz für einen Übertragungskanal für Uplink-Übertragungen vor Zugriff durch den AP anfordert; und Empfangen (830) einer Sendeerlaubnis(clear-to-send - CTS)-Nachricht von dem AP;
Senden (840), an den AP, eines Rahmens, der angibt, dass die STA eine OFDMA-Uplink-Übertragung starten möchte; Empfangen (850), durch die STA, eines OFDMA-Empfangsbeginn(OFDMA Begin Receive - OBR)-Rahmens von dem AP, wobei der OBR-Rahmen verwendet wird, um vielfache mit dem AP verknüpfte STAs auszulösen, um die OFDMA-Uplink-Übertragung durchzuführen;
wobei der OBR-Rahmen umfasst:
Bezeichner der vielfachen STAs, die ausgelöst werden, um die OFDMA-Uplink-Übertragung durchzuführen, Informationen über vielfache Unterträgergruppen, die den vielfachen STAs für die OFDMA-Uplink-Übertragung zugeordnet sind, und einen Indikator einer maximalen Länge einer Bitübertragungsschichtprotokolldateneinheit (physical layer protocol data unit - PPDU), die die vielfachen STAs einhalten müssen; und
wobei die STA bestimmt, dass sie ausgelöst wird, um die OFDMA-Uplink-Übertragung basierend auf den Bezeichnern der vielfachen STAs durchzuführen, Senden einer OFDMA-PPDU an den AP als Reaktion auf den OBR-Rahmen durch Verwenden vielfacher Unterträger in einer der STA zugeordneten Unterträgergruppe.

2. Verfahren nach Anspruch 1, wobei die Informationen über die vielfachen Unterträgergruppen eine Vielzahl von Unterträgergruppenindizes umfassen, die die Unterträgergruppen angeben.

3. Verfahren nach einem der Ansprüche 1 oder 2, wobei das Senden der OFDMA-PPDU umfasst:
Senden der OFDMA-PPDU an einen Zwischenrahmenabstand nach dem Empfangen des OBR-Rahmens, wobei der Zwischenrahmenabstand es der STA ermöglicht, von einem Empfangsmodus in einen Übertragungsmodus zu wechseln.

4. Verfahren, durchgeführt durch einen Zugangspunkt (STA), für auf eine Uplink-Übertragung über orthogonalen Frequenzmultiplex-Vielfachzugriff (OFDMA) in einem drahtlosen lokalen Netzwerk (WLAN), das Verfahren umfassend:
Empfangen, von einer Station (STA), eines Sendeaufforderungs(RTS)-Rahmens, der Schutz für einen Übertragungskanals für Uplink-Übertragungen vor Zugriff durch den AP anfordert;
Senden (830) einer Sendeerlaubnis(CTS)-Nachricht;
Empfangen (840), von der STA, eines Rahmens, der angibt, dass die STA eine OFDMA-Uplink-Übertragung starten möchte;
Senden (850), durch die STA, eines OFDMA-Empfangsbeginn(OBR)-Rahmens an vielfache Stationen (STAs), die mit dem AP verknüpft sind, wobei der OBR-Rahmen verwendet wird, um die vielfachen mit dem AP verknüpften STAs auszulösen, um die OFDMA-Uplink-Übertragung durchzuführen, der OBR-Rahmen, umfassend:
Bezeichner der vielfachen STAs, die ausgelöst werden, um die OFDMA-Uplink-Übertragung durchzuführen, Informationen über vielfache Unterträgergruppen, die den vielfachen STAs für die OFDMA-Uplink-Übertragung zugeordnet sind, einen Indikator einer maximalen Länge einer Bitübertragungsschichtprotokolldateneinheit (PPDU), die die vielfachen STAs einhalten müssen; und
Empfangen, durch den AP, gemäß den vielfachen Unterträgergruppen, jeder OFDMA-PPDU, die gleichzeitig durch die vielfachen ausgelösten STAs als Reaktion auf den OBR-Rahmen gesendet wird.

5. Verfahren nach Anspruch 4, wobei die Informationen über die vielfachen Unterträgergruppen eine Vielzahl von Unterträgergruppenindizes umfassen, die die Unterträgergruppen angeben.

6. Zugriffspunkt (AP), der die orthogonale Frequenzmultiplex-Vielfachzugriffs(OFDMA)-Übertragung in einem drahtlosen lokalen Netzwerk (WLAN) unterstützt, wobei der AP umfasst:
einen Prozessor;
ein computerlesbares Speichermedium, das konfiguriert ist, um ein Programm zu speichern, das durch den Prozessor ausgeführt wird, wobei, wenn das Programm durch den Prozessor laufen gelassen wird, der Zugriffspunkt das Verfahren nach einem der Ansprüche 4 oder 5 durchführt.

7. Benutzerstation (STA), die die orthogonale Frequenzmultiplex-Vielfachzugriffs(OFDMA)-Übertragung in einem drahtlosen lokalen Netzwerk (WLAN) unterstützt, wobei die Benutzerstation umfasst:
einen Prozessor;
ein computerlesbares Speichermedium, das konfiguriert ist, um ein Programm zu speichern, das durch den Prozessor ausgeführt wird, wobei, wenn das Programm durch den Prozessor laufen gelassen wird, die Benutzerstation das Verfahren nach einem der Ansprüche 1 bis 3 durchführt.

## Revendications

1. Procédé, par une station, STA, permettant une transmission de liaison montante à accès multiple par répartition orthogonale de la fréquence, OFDMA, dans un réseau local sans fil, WLAN, le procédé comprenant :
l'envoi (820), à un point d'accès, AP, d'une trame de demande d'émission, RTS, demandant la protection d'un canal de transmission pour des transmissions de liaison montante contre l'accès par l'AP ; et la réception (830), par l'AP, d'un message prêt à émettre, CTS ;
l'envoi (840), à l'AP, d'une trame indiquant que la STA souhaite démarrer une transmission de liaison montante OFDMA; la réception (850), par la STA, d'une trame de début de réception OFDMA, OBR, de l'AP, la trame OBR étant utilisée pour déclencher plusieurs STA associés à l'AP pour effectuer la transmission de liaison montante OFDMA;
dans lequel la trame OBR comprend :
des identifiants des multiples STA déclenchées pour effectuer la transmission de liaison montante OFDMA, des informations sur les multiples groupes de sous-porteuses attribués aux multiples STA pour la transmission de liaison montante OFDMA et un indicateur d'une longueur maximale d'une unité de données de protocole de couche physique, PPDU à laquelle les multiples STA doivent adhérer ; et
où la STA détermine qu'elle est déclenchée pour effectuer la transmission de liaison montante OFDMA sur la base des identifiants des multiples STA, l'envoi d'une PPDU OFDMA à l'AP en réponse à la trame OBR en utilisant plusieurs sous-porteuses dans un groupe de sous-porteuses attribué à la STA.

2. Procédé selon la revendication 1, dans lequel les informations concernant les multiples groupes de sous-porteuses comprennent une pluralité d'indices de groupes de sous-porteuses indiquant les groupes de sous-porteuses.

3. Procédé selon l'une quelconque des revendications 1 à 2, dans lequel l'envoi de la PPDU OFDMA comprend :
l'envoi à la PPDU OFDMA d'un espacement inter-trames après réception de la trame OBR, l'espacement inter-trames permettant à la STA de commuter d'un mode de réception à un mode de transmission.

4. Procédé effectué par un point d'accès, AP, de transmission de liaison montante d'accès multiple par répartition de la fréquence orthogonale, OFDMA, dans un réseau local sans fil, WLAN, le procédé comprenant :
la réception (820), par une station, STA, d'une trame de demande d'émission, RTS, demandant la protection d'un canal de transmission pour des transmissions de liaison montante contre l'accès par l'AP ; et
l'envoi (830), d'un message prêt à émettre, CTS ;
la réception (840), par la STA, d'une trame indiquant que la STA souhaite démarrer une transmission de liaison montante OFDMA ;
l'envoi (850), par l'AP, d'une trame de début de réception OFDMA, OBR, à de multiples stations, STA, associées à l'AP, la trame OBR étant utilisée pour déclencher les multiples STA associés à l'AP pour effectuer la transmission de liaison montante OFDMA, la trame OBR comprenant :
des identifiants des multiples STA déclenchés pour effectuer la transmission de liaison montante OFDMA, des informations sur les multiples groupes de sous-porteuses attribués aux multiples STA pour la transmission de liaison montante OFDMA et un indicateur d'une longueur maximale d'une unité de données de protocole de couche physique, PPDU, à laquelle les multiples STA doivent adhérer ; et
la réception, par l'AP, en fonction des multiples groupes de sous-porteuses, de chaque PPDU OFDMA qui est envoyée simultanément par les multiples STA déclenchées en réponse à la trame OBR.

5. Procédé selon la revendication 4, dans lequel les informations concernant les multiples groupes de sous-porteuses comprennent une pluralité d'indices de groupes de sous-porteuses indiquant les groupes de sous-porteuses.

6. Point d'accès, AP, prenant en charge la transmission par accès multiple par répartition de fréquence orthogonale, OFDMA, dans un réseau local sans fil, WLAN, l'AP comprenant :
un processeur ;
un support de stockage lisible par ordinateur, configuré pour stocker un programme exécuté par le processeur, dans lequel lorsque le programme est exécuté par le processeur, le point d'accès effectue le procédé selon l'une quelconque des revendications 4 ou 5.

7. Station d'utilisateur, STA, prenant en charge la transmission par accès multiple par répartition de fréquence orthogonale, OFDMA, dans un réseau local sans fil, WLAN, la station d'utilisateur comprenant :
un processeur ;
un support de stockage lisible par ordinateur, configuré pour stocker un programme exécuté par le processeur, dans lequel lorsque le programme est exécuté par le processeur, la station utilisateur exécute le procédé selon l'une quelconque des revendications 1 à 3.
